Europäisches Patentamt

European Patent Office

Office européen des brevets

(11) Numéro de publication: **0 379 451**
**A1**

## (12) DEMANDE DE BREVET EUROPEEN

(21) Numéro de dépôt: 90420024.3

(22) Date de dépôt: 16.01.90

(51) Int. Cl.⁵: **C08J 3/24, C08J 3/07, C08J 3/12**

(30) Priorité: **19.01.89 FR 8900861**

(43) Date de publication de la demande:
**25.07.90 Bulletin 90/30**

(84) Etats contractants désignés:
**AT BE CH DE DK ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Desmonceau, Daniel**
**80, chemin de Chalamont**
**F-69140 Rillieux-La-Pape(FR)**
Inventeur: **Jorda, Rafael**
**30, rue Claude Jusseaud**
**F-69110 Sainte-Foy-Les-Lyon(FR)**

(74) Mandataire: **Seugnet, Jean Louis et al**
**RHONE-POULENC CHIMIE Service Brevets**
**Chimie Centre de Recherches des Carrières**
**B.P. 62**
**F-69192 Saint-Fons Cédex(FR)**

(54) **Procédé de préparation de particules non collantes à base d'une composition organopolysiloxane réticulée par des réactions de polycondensation.**

(57) La présente invention concerne un procédé de préparation de particules non collantes à base d'une composition organopolysiloxane réticulée par des réactions de polycondensation.

Selon ce procédé on met en émulsion les huiles silicones ($\alpha,\omega$-(dihydroxy) de départ en présence de poudre de silice, d'agent de réticulation et d'un catalyseur à l'étain, puis on casse l'émulsion et on réticule les particules par chauffage à une température de 40-100 °C. On obtient ainsi des particules non collantes, de granulométrie moyenne comprise entre 50 $\mu$m et 3 mm, revêtues de façon uniforme à leur surface de grains de silice.

Application du procédé de l'invention à l'encapsulation ou à la dispersion de principes actifs tels que médicaments ou produits phyto-sanitaires et à la préparation de charges soupes pour matières plastiques synthétiques ou naturelles.

## PROCEDE DE PREPARATION DE PARTICULES NON COLLANTES A BASE D'UNE COMPOSITION ORGA-NOPOLYSILOXANE RETICULEE PAR DES REACTIONS DE POLYCONDENSATION

La présente invention concerne un procédé de préparation de particules non collantes à base d'une composition organopolysiloxane réticulée et un élastomère par des réactions de polycondensation, contenant éventuellement un principe actif encapsulé par l'élastomère et/ou dispersé au sein de l'élastomère.

Il existe une demande croissante de particules en élastomères silicones en vue de leur utilisation principalement dans deux types d'applications :
- l'incorporation de ces particules comme charge dans une matrice polymère, en particulier dans une composition organopolysiloxane réticulable en un élastomère en vue notamment d'en augmenter la souplesse,
- le conditionnement (encapsulation ou dispersion) d'un principe actif par ces particules en vue de sa protection et éventuellement de sa libération contrôlée.

Parmi les nombreux documents brevets décrivant des procédés de préparation de particules ou microparticules en élastomères silicones, réticulés par des réactions de polyaddition et/ou polycondensation, on peut citer plus particulièrement :
- EP-A-252 510 enseignant un procédé consistant à mélanger les divers constituants d'un élastomère silicone liquide, comportant éventuellement une charge siliceuse, à une température comprise entre -60 $^\circ$C et +5 $^\circ$C, et à les pulvériser ensuite dans un air chaud porté à une température comprise entre +80 $^\circ$C et 200 $^\circ$C, pour obtenir des particules de forme sensiblement sphérique, de granulométrie comprise entre quelques dizaines de millimicromètres à plusieurs centaines de micromètres.
- US-A-4 248 751 décrivant un procédé de préparation d'un latex silicone constitué de particules d'élastomère silicone polyaddition, dispersées dans une phase aqueuse qui consiste à polymériser en émulsion aqueuse un mélange d'huiles silicones vinylées, d'huiles silicones hydrogénées et d'un tensio-actif, puis à réticuler ces huiles par chauffage après addition d'un catalyseur au platine. Il est possible d'ajouter au latex une silice colloïdale afin d'améliorer les propriétés du revêtement élastomère filmogène obtenu après enduction du latex sur un support et évaporation de l'eau. Il n'est ni décrit, ni suggéré dans ce brevet l'obtention de particules d'élastomère silicone, de granulométrie moyenne supérieure à 50 $\mu$m, à partir de cette émulsion de latex.
- EP-A-217 257 décrivant un procédé de préparation de particules en silicone, de granulométrie comprise entre 0,01 et 10 mm qui consiste à polymériser en émulsion un diorganocyclopolysiloxane porteur de groupes vinyle et mercaptoalkyle, en présence d'un acide alkylarylsulfonique, à casser l'émulsion par addition de sulfate de magnésium et par chauffage, à introduire un monomère vinylique et à effectuer une polymérisation/greffage en présence d'initiateur radicalaire.
- US-A-4 594 134 enseignant l'obtention de microparticules ou particules sphériques, de granulométrie comprise entre 2 et 300 $\mu$m, en élastomère silicone polyaddition, obtenues par atomisation dans un séchoir vers 230 $^\circ$C, d'une composition catalysée par du platine et renfermant un inhibiteur du platine. La réticulation peut être effectuée sans platine et sous U.V. mais avec un photosensibilisateur. Avant réticulation la composition peut être dispersée dans un milieu liquide tel qu'un solvant organique ou de l'eau.
- KOKAI 87/257 939 décrivant l'obtention de poudre de silicone par séchage et pulvérisation d'une émulsion aqueuse d'une composition silicone polyaddition.
- EP-A-267 003 visant la préparation de microsphères en élastomère silicone par dispersion dans l'eau en présence d'un tensio-actif, d'une composition organopolysiloxane réticulable par des réactions d'addition du type MICHAEL et réticulation de la composition.
- US-A-4 370 160 visant un procédé similaire à EP-A-267 003 sauf que la composition organopolysiloxane est réticulée sous un rayonnement U.V. en présence d'un photosensibilisateur.

Par rapport à l'état de la technique, la présente invention a principalement pour but de proposer un procédé de préparation de particules à base d'une composition organopolysiloxane réticulée en un élastomère par des réactions de polycondensation, qui permette d'aboutir directement à des particules qui soient stockables, facilement manipulables et donc qui ne s'agglomèrent pas les unes aux autres.

Un autre but de la présente invention est de proposer un procédé de préparation de particules, directement à partir de compositions organopolysiloxanes polycondensation disponibles dans le commerce.

Un autre but de la présente invention est de proposer un procédé de préparation de particules du type ci-dessus, ces particules pouvant être incorporées aisément et de façon homogène en tant que charge dans une matrice polymère synthétique ou naturelle, en particulier dans un élastomère silicone.

Un autre but de la présente invention est de proposer un procédé de préparation de particules en élastomère silicone polycondensation qui permette directement soit d'encapsuler, soit de disperser de façon homogène au sein de l'élastomère, un principe actif quelconque en vue de sa protection et de son éventuelle libération contrôlée.

Ces buts et d'autres sont atteints par la présente invention qui concerne en effet un procédé de préparation de particules, de granulométrie moyenne comprise entre 50 μm et 3 mm, non collantes, à base d'une compositon organopolysiloxane réticulée en un élastomère par des réactions de polycondensation, caractérisé en ce que :

a) - on met en émulsion :

(A) - 100 parties d'un α,ω-(dihydroxy)-polydiorganosiloxane,

(B) - 0,1 à 20 parties d'un agent de réticulation choisi parmi les organotrialcoxysilanes, les silicates d'alkyle et leur produit d'hydrolyse partielle,

(C) - une quantité efficace d'un catalyseur à l'étain,

(D) - une quantité efficace d'un agent tensio-actif du type huile dans eau,

(E) - 3 à 100 parties, de préférence 5 à 30 parties d'une poudre de silice de combustion ou de précipitation,

(F) - de l'eau et, éventuellement

(G) - un principe actif.

b) - on forme les particules par chauffage à une température comprise entre 40 et 100 °C.

Selon une variante préférée, l'émulsion comporte un solvant organique volatil dont le point d'ébullition est inférieur à 100 °C, comme par exemple le chloroforme CHCl₃.

L'utilisation de solvant organique volatil procure plusieurs avantages :

- il permet de mettre facilement en émulsion aqueuse la composition organopolysiloxane même si cette dernière est une composition du commerce, se présentant en un ou deux emballages avec ou sans charges déjà incorporées dans un des deux emballages,

- lors de l'étape b), le solvant organique s'évapore, l'émulsion aqueuse est alors cassée, ce qui facilite l'apparition des particules.

Le principe actif (G) est introduit dans l'émulsion de diverses manières :

- si le principe actif est soluble dans le solvant organique volatil il peut être introduit en solution dans ce solvant,

- si le principe actif est soluble dans l'eau, il est souhaitable que l'eau de l'émulsion soit saturée en principe actif ; dans ce cas, le principe actif se trouve en majorité dispersé de façon homogène au sein des particules,

- si le principe actif (G) est insoluble dans l'eau et dans le solvant organique, il peut être introduit sous forme de particules dispersées dans la composition organopolysiloxane, de préférence dans les huiles silicones (A) de départ, ces microparticules se trouvant encapsulées lors de l'étape b).

Après achèvement de l'étape b), les particules sont filtrées, éventuellement lavées par un alcool en particulier le méthanol, puis séchées pour éliminer l'eau résiduelle et achever, si nécessaire la réticulation de la composition organopolysiloxane.

Les particules sèches sont par la suite tamisées selon des zones de granulométrie prédéterminées pour éliminer l'excès éventuel de silice.

Le procédé de l'invention permet d'aboutir à des particules de granulométrie moyenne comprise entre 50 μm et 3 mm, plus spécifiquement entre 100 μm et 1 mm.

Les α,ω-(dihydroxy)polydiorganosiloxanes (A) doivent avoir une viscosité d'au moins 100 mPa.s à 25 °C, de préférence d'au moins 10 000 mPa.s.

C'est en effet pour des viscosités supérieures à 10 000 mPa.s que l'on obtient un élastomère présentant un ensemble de propriétés mécaniques convenables, en particulier au niveau de la dureté Shore A et de l'allongement.

En outre plus la viscosité est élevée et plus les propriétés mécaniques se conservent lors du vieillissement de l'élastomère.

Les radicaux organiques des α,ω-(dihydroxy)-polydiorganopolysiloxanes sont des radicaux hydrocarbonés monovalents contenant jusqu'à 6 atomes de carbone, éventuellement substitué par des groupes cyano ou fluoro. Les substituants généralement utilisés du fait de leur disponibilité dans les produits industriels sont les radicaux méthyle, éthyle, propyle, phényle, vinyle et 3,3,3-trifluoropropyle. En général au moins 80 % en nombre de ces radicaux sont des radicaux méthyle.

Dans le cadre de la présente invention on préfère plus spécialement utiliser les α,ω-(dihydroxy)polydiorganosiloxanes déjà en émulsion et préparés par le procédé de polymérisation anionique décrit dans les brevets américains précités : US-A-2 891 920 et surtout US-A-3 294 725 (cités comme référence). Le polymère obtenu est stabilisé anioniquement par un agent tensio-actif (D) qui, conformément à l'enseignement de US-A-3 294 725 est de préférence le sel d'un métal alcalin d'un acide hydrocarboné aromatique sulfonique, l'acide libre jouant également le rôle de catalyseur de polymérisation.

Le catalyseur et l'agent tensio-actif préférés sont l'acide dodécylbenzènesulfonique et ses sels de métaux alcalins, en particulier son sel de sodium. On peut ajouter éventuellement d'autres agents tensio-actifs anioniques ou non-ioniques. Toutefois cet ajout n'est pas nécessaire car, conformément à l'enseignement de US-A-3 294 725, la quantité d'agent tensio-actif anionique résultant de la neutralisation de l'acide sulfonique est suffisante pour stabiliser l'émulsion de polymère. Cette quantité est généralement inférieure à 3 %, de préférence 1,5 % du poids de l'émulsion.

Ce procédé de polymérisation en émulsion est particulièrement intéressant car il permet d'obtenir directement le polymère (A) en émulsion. Par ailleurs ce procédé permet de pouvoir obtenir sans difficulté des émulsions de α,ω-(dihydroxy)-polydiorganosiloxane de très haute viscosité.

Pour préparer l'émulsion on peut également partir d'α,ω-(dihydroxy)polydiorganosiloxane déjà polymérisé, puis le mettre en émulsion aqueuse en stabilisant les émulsions par un agent tensio-actif choisi parmi un agent tension-actif anionique, cationique, amphotère et non-ionique suivant un procédé bien connu de l'homme de métier et décrit en détail dans la littérature (voir par exemple les brevets FR-A-2 064 563, FR-A-2 094 322, FR-A-2 114 230 et EP-A-169 098).

Selon ce procédé, on mélange par simple agitation les polymères α,ω-(dihydroxy)-polydiorgosiloxane avec l'agent tensio-actif, ce dernier pouvant être en solution aqueuse, à ajouter ensuite si nécessaire de l'eau et à transformer l'ensemble en une émulsion fine et homogène par passage dans un broyeur classique à colloïdes.

Par la suite le broyat obtenu est dilué par une quantité d'eau appropriée et on obtient ainsi une émulsion stabilisée par un agent tensio-actif stable au stockage.

Les agents tensio-actifs anioniques préférés sont choisis parmi les alkylbenzène sulfonates de métaux alcalins, les sulfates d'alkyle (ou) d'alkylaryle éthoxylés) et de métaux alcalins et les dioctylsulfosuccinates de métaux alcalins.

Les agents tensio-actifs cationiques préférés sont choisis parmi les chlorures d'ammonium quaternaire et les sels d'ammonium quaternaire polyéthoxylés.

Les agents tensio-actifs non-ioniques préférés sont choisis parmi les acides gras polyéthoxylés, les esters de sorbitan, les esters de sorbitan polyéthoxylés, et les alkylphénols polyéthoxylés.

On utilise généralement de 1 à 30 parties, de préférence de 2 à 10 parties, de tensio-actif (D) pour 100 parties de la totalité des polymères (A) et (B) organopolysiloxane.

Un tensio-actif convenant plus particulièrement est l'alcool polyvinylique. C'est un produit solide granuleux qui peut encore présenter des groupes acétate. Généralement son pourcentage d'hydrolyse est élevé, dépassant 85 %. On peut utiliser par exemple le RHODOVIOL ® 25/140 de RHONE-POULENC, OU L'ELVANOL ® 50-42 de DUPONT. On utilise généralement de 1 à 20 parties, de préférence de 2 à 10 parties d'alcool polyvinylique pour 100 parties de la totalité des polymères organopolysiloxanes (A) et (B).

L'agent de réticulation (B) est choisi parmi les organotrialcoxysilanes, comme par exemple le vinyltriméthoxysilane, les silicates d'alkyle tels que le silicate de méthyle ou le silicate d'éthyle ou leur produit d'hydrolyse partielle, c'est-à-dire les polysilicates d'alkyle tels que le polysilicate de méthyle et le polysilicate d'éthyle.

Les organotrialcoxysilanes et les silicates d'alkyle répondent de préférence à la formule générale :

$$R'_aSi(OR)_{4-a}$$

dans laquelle R est un radical alkyle ayant de 1 à 4 atomes, R' est R ou vinyle et a est 1 ou 0.

Le constituant (C) est un composé catalytique à l'étain généralement un sel d'organoétain introduit de préférence sous forme d'une émulsion aqueuse. Les sels d'organoétain utilisables sont décrits, en particulier dans l'ouvrage de NOLL, Chemistry and Technology of Silicones Academic Press (1968), page 337.

On peut également utiliser comme composé catalytique à l'étain le produit de réaction d'un sel d'étain, en particulier d'un di-carboxylate de diorganoétain sur du polysilicate d'éthyle, comme décrit dans le brevet US-A-3 862 919.

On peut également utiliser le produit de réaction d'un silicate d'alkyle ou d'un alkyltrialcoxysilane sur le diacétate de dibutylétain comme décrit dans le brevet belge BE-A-842 305.

Les sels d'étain préférés sont les bischelates d'étain (EP-A-147 323 et EP-A-235 049), les dicarboxylates de diorganoétain et en particulier les diversatates de dibutyl- ou de dioctylétain (brevet britannique GB-A-1 289 900), le diacétate de dibutyl- ou de dioctylétain, le dilaurate de dibutyl-ou de dioctylétain. On utilise de 0,01 à 3, de préférence de 0,05 à 2 parties de sel d'organoétain pour 100 parties de (A).

Les silices (E) sont choisies parmi les silices de combustion et les silices de précipitation.

Elles ont une surface spécifique, mesurée selon les méthodes BET, d'au moins 50 m²/g, de préférence supérieur à 70 m²/g, une dimension moyenne des particules primaires inférieure à 80 nanomètre et une densité apparente inférieure à 200 g/litre.

Ces silices peuvent être incorporées telles quelles ou après avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des acloxysilanes tels que le diméthyldiméthoxysilane, le diméthylvinyléthoxysilane, le triméthylméthoxysilane. Lors de ce traitement, les silices peuvent accroître leur poids de départ jusqu'à un taux de 20 %, de préférence 18 % environ.

Les particules obtenues par le procédé de l'invention contenant ou non un principe actif (G) sont plus particulièrement utilisables comme charge dans les matrices polymères naturels ou synthétiques, en particulier dans les élastomères tels que les caoutchoucs naturels ou synthétiques et les élastomères silicones.

Les particules préparées par le procédé de l'invention sont utilisables pour enrober, encapsuler ou disperser dans une matrice d'élastomère, un principe actif quelconque tel que, notamment, des catalyseurs, des colorants, des durcisseurs, des détergents, des produits pharmaceutiques, des enzymes, des parfums, des aliments, des combustibles, des encres, des insecticides, des métaux, des médicaments, des monomères, des agents odorants, des huiles, des phéromones, des plastifiants, des propulseurs, des solvants, des substrats solides contenant un constituant actif absorbé et des vitamines.

Les émulsions selon l'invention peuvent être préparées selon les méthodes classiques de mise en émulsion des polymères organopolysiloxanes.

On peut par exemple mélanger l'agent tensio-actif (D) et la poudre de silice (E) à de l'eau à une température comprise entre la température ambiante et 80 °C jusqu'à l'obtention d'un mélange homogène. On ajoute alors l'organopolysiloxane (A), se présentant déjà éventuellement sous forme d'une émulsion aqueuse, et l'agent de réticulation (B) au mélange tout en agitant énergiquement toujours à une température comprise entre 25 et 80 °C, pour former une émulsion. L'organopolysiloxanes (A) et l'agent de réticulation (B) peuvent être mis au préalable en solution dans un solvant organique.

On ajoute alors le catalyseur à l'étain (C) et le principe actif (G).

Si le principe actif (G) est soluble dans l'eau et insoluble dans le solvant organique volatil, on peut l'introduire dans l'eau de départ de l'émulsion, de préférence à saturation.

Si le principe actif (G) est soluble dans le solvant organique volatil et insoluble dans l'eau, on peut l'introduire dans la solution du solvant organique volatil des polyorganosiloxanes (A) et (B).

Si le principe actif (G) est insoluble dans l'eau et dans le solvant organique volatil, on peut le disperser dans la composition organopolysiloxane avant sa mise en émulsion, de préférence seulement dans l'huile (A) de départ. Ce dernier mode d'introduction de (G) est bien entendu utilisable quelle que soit la solubilité de (G) dans l'eau et dans le solvant organique.

Puis on porte l'émulsion à une température (inférieure à 100 °C) et pendant une durée adaptée à l'apparition des particules.

On refroidit ensuite la solution à température ambiante, on isole les particules par centrifugation ou par filtration sur toile polyester et on lave plusieurs fois à l'eau pour éliminer le tensio-actif et la silice.

Après un lavage éventuel par un alcool, de préférence le méthanol, il peut être avantageux de mélanger les particules obtenues par de la silice en poudre pour parfaire leur caractère non collant, puis de tamiser les particules pour éliminer la poudre de silice en excès.

De façon tout à fait surprenante et inattendue, la présente invention a permis de mettre en évidence que les grains de silice se trouvent concentrés à la surface des particules ce qui leur confère leur caractère non collant. Les particules se présentent sous la forme d'une poudre dont les différents grains ne s'agglomèrent pas entre eux.

Les exemples suivants illustrent l'invention sans en limiter la portée.

Dans ce qui suit ou ce qui précède, sauf indication contraire, les parties et pourcentages sont en poids.


- EXEMPLE 1:

On prépare une solution aqueuse contenant :
- 600 g d'eau distillée,
- 2,5 g de tensio-actif RHODOVIOL ® 25/140, commercialisé par la Société RHONE-POULENC,
- 3,5 g de silice de précipitation de surface spécifique BET 160 m²/g.

On coule dans cette solution aqueuse, sous forte agitation pour former une émulsion, 30 g d'une composition organopolysiloxane en solution dans 13 g de CHCl₃, cette composition d'organopolysiloxane provenant du mélange de :
- 740 parties d'une huile (α,ω-(dihydroxy)-polydiméthylsiloxane, de viscosité 15 000 mPa.s à 25 °C,
- 220 parties de silice de diatomées,
- 22 parties de silicate de n-propyle,
- 8 parties d'octoate stanneux.

On maintient la température à 25 °C pendant 30 minutes sous très forte agitation (1 350 tours/minute).

On porte progressivement la température de l'eau à 50 °C ; on l'y maintient 1 heure. Ensuite, on refroidit la solution à 25 °C, on filtre les particules obtenues sur toile polyester de maille 70 µm et on lave une fois à l'eau pour éliminer le tensio-actif et la silice.

Ces particules sont récupérées, puis placées sous vide à 125 °C pendant 3 heures. Elles sont ensuite tamisées pour éliminer l'excès de silice et fractionnées par taille de particules.

Le rendement massique est de 85 %.

Par passage au tamis, on détermine la répartition suivante de diamètre particulaire φ des particules :

200 μm < φ < 500 μm : 72 % en poids,
500 μm < φ < 1 000 μm : 28 % en poids.

- EXEMPLE COMPARATIF 2 :

On répète exactement le mode opératoire de l'exemple 1, sauf que l'on n'introduit pas les 3,5 g de silice de précipitation.

On obtient des particules collantes, agglomérées entre elles et, par conséquent inutilisables.

**Revendications**

1. - Procédé de préparation de particules non collantes, de granulométrie moyenne comprise entre 50 μm et 3 mm, à base d'une composition organopolysiloxane réticulée en un élastomère par des réactions de polycondensation, caractérisé en ce que :

a) - on met en émulsion :

(A) - 100 parties d'un´ a,s-(dihydroxy)-polydiorganosiloxane,

(B) - 0,1 à 20 parties d'un agent de réticulation choisi parmi les organotrialcoxysilanes, les silicates d'alkyle et leur produit d'hydrolyse partielle,

(C) - une quantité efficace d'un catalyseur à l'étain,

(D) - une quantité efficace d'un agent tensio-actif du type huile dans eau,

(E) - 3 à 100 parties, de préférence 5 à 30 parties d'une poudre de silice de combustion ou de précipitation, et

(F) - de l'eau,

b) - on forme les particules par chauffage à une température comprise entre 40 et 100 ° C.

2. - Procédé selon la revendication 1, caractérisé en ce que l'organopolysiloxane (A) et l'agent de réticulation (B) sont introduits dans l'eau, sous la forme d'une solution dans un solvant organique volatil dont le point d'ébullition est inférieur à 100 ° C.

3. - Procédé selon la revendication 1 ou 2, caractérisé en ce que l'émulsion comporte en outre un principe actif (G) introduit sous la forme d'une solution dans l'eau ou en solution dans le solvant organique volatil.

4. - Procédé selon la revendication 1 ou 2, caractérisé en ce que l'émulsion comporte en outre un principe actif (G) introduit sous la forme d'une solution dans l'eau (FG) de l'émulsion.

5. - Procédé selon la revendication 4, caractérisé en ce que la solution est saturée.

6. - Procédé selon la revendication 1, caractérisé en ce que le principe actif (F) est introduit sous forme de microparticules et est dispersé au sein de la composition organopolysiloxane avant sa mise en émulsion.

7. - Utilisation des particules obtenues par la mise en oeuvre des procédés tels que définis à l'une quelconque des revendications 1 à 6 comme charge pour matrice polymère naturel ou synthétique.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 304 946 (TORAY SILICONE CO.) * Revendications 1-3; page 9, exemple 5 * --- | 1,7 | C 08 J 3/24<br>C 08 J 3/07<br>C 08 J 3/12 |
| A | EP-A-0 166 397 (DOW CORNING CORP.) * Revendications 1-7; pages 16,17, exemple 1 * --- | 1,7 | |
| A | EP-A-0 277 740 (DOW CORNING CO.) * Revendications 1-7; page 6, exemples 1,2 * ----- | 1,7,6 | |

**DOMAINES TECHNIQUES RECHERCHES (Int. Cl.5)**

C 08 J
A 61 K

**Le présent rapport a été établi pour toutes les revendications**

| Lieu de la recherche | Date d'achèvement de la recherche | Examinateur |
|---|---|---|
| LA HAYE | 11-04-1990 | OUDOT R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................
& : membre de la même famille, document correspondant

EPO FORM 1503 03.82 (P0402)